(19) Europäisches Patentamt
European Patent Office
Office européen des brevets

(11) **EP 4 415 148 A2**

(12) **EUROPEAN PATENT APPLICATION**

(43) Date of publication:
**14.08.2024 Bulletin 2024/33**

(21) Application number: **24156034.1**

(22) Date of filing: **06.02.2024**

(51) International Patent Classification (IPC):
**H01M 50/516** (2021.01)   **B23K 35/00** (2006.01)

(52) Cooperative Patent Classification (CPC):
**H01M 50/516; B23K 35/00;** H01M 50/503;
H01M 50/522

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.02.2023 KR 20230018247**

(71) Applicant: **SK On Co., Ltd.**
**Seoul 03161 (KR)**

(72) Inventors:
• **KIM, Jae Hun**
  **34124 Daejeon (KR)**
• **KIM, Tae Hyun**
  **34124 Daejeon (KR)**
• **KIM, Hyeong Won**
  **34124 Daejeon (KR)**
• **LEE, Ki Dong**
  **34124 Daejeon (KR)**

(74) Representative: **Bird & Bird LLP**
**Maximiliansplatz 22**
**80333 München (DE)**

(54) **BATTERY MODULE MANUFACTURING METHOD AND BATTERY MODULE**

(57)    A battery module manufacturing method according to an embodiment of the present disclosure comprises a step of inserting each of electrode tabs of a plurality of battery cells into a plurality of holes included in a bus bar; and a step of bonding the electrode tabs to the bus bar by irradiating laser under feeding of a wire, wherein the bus bar may electrically connect the electrode tabs of the plurality of battery cells to each other.

FIG. 7

**Description**

BACKGROUND OF THE INVENTION

1. Field

Embodiments of the present disclosure relate to a battery module manufacturing method and a battery module.

2. Description of the Related Art

Recently, the requirements for high-capacity, high-output secondary batteries are increasing, and there is a need to develop secondary batteries that require high energy density, high performance, and a high level of reliability corresponding to these requirements.

In particular, in the cell-to-cell electrical connection method that requires a high level of reliability, various methods such as ultrasonic welding, laser welding, and mechanical (bolt/nut) joining are used, but laser welding is used as the most universal bonding method in order to respond to increasing energy density requirements.

As a method of such laser welding, lap welding of a single or multiple electrode tabs and a bus bar is generally used. However, this method not only has limitations in that there is a large variation in tensile strength after welding and a high possibility of welding defects such as weak welding depending on the pressurization conditions, but also requires bending and cutting of electrode tabs of multiple specifications within a unit module for welding, causing an increase of processes and a rise of management cost.

In addition, the resistance of individuals cells is non-uniform due to differences in electrode tab length for each cell specification within a module, which is likely to have a negative impact on long-term durability. In particular, there have been difficulties in securing stable welding quality (tensile strength, electrical resistance, etc.) in welding of dissimilar materials of Al electrode tabs and bus bars.

Furthermore, there has also been a limitation that a weldable range is limited depending on the volume of a cell tab upon welding.

According to the present disclosure to solve this problem, a battery module manufacturing method and a battery module that can improve process efficiency by providing a degree of freedom for cell tap management can be provided.

SUMMARY OF THE INVENTION

Embodiments of the present disclosure may provide a battery module manufacturing method and a battery module that can improve process efficiency by providing a degree of freedom for cell tab management.

A battery module manufacturing method according to an embodiment of the present invention includes: a step of inserting each of electrode tabs of a plurality of battery cells into a plurality of holes included in a bus bar; and a step of bonding the electrode tabs to the bus bar by irradiating laser underfeeding of a wire, wherein the bus bar may electrically connect the electrode tabs of the plurality of battery cells to each other. In other words, the present invention relates to a method for manufacturing a battery module, the method comprising the steps of: (a) providing a plurality of battery cells, each battery cell having an electrode tab; (b) providing a bus bar including a plurality of holes; (c) inserting each one of the electrode tabs into a respective one of the plurality of holes; and bonding the electrode tabs to the bus bar by irradiating laser under feeding of a wire, such that the bus bar electrically connects the electrode tabs of the plurality of battery cells to each other.

A battery module according to an embodiment of the present invention may include: a plurality of battery cells, each including an electrode tab; and a bus bar including a plurality of holes into which the electrode tabs are each inserted, and connected to the electrode tabs to electrically connect the plurality of battery cells to each other, wherein the electrode tabs inserted into the holes and the bus bars are joined with each other by a weld bead, wherein the weld bead is formed using a separate wire that is distinguished from the electrode tab as a base material, and wherein the width of the weld bead based on a weld bead cross-section in the thickness direction of the bus bar may be 7 times or more the thickness of the electrode tab. In an exemplary embodiment, each one of the electrode tabs may be inserted into a respective one of the plurality of holes.

According to the present disclosure, a battery module manufacturing method and a battery module that can improve process efficiency may be provided by providing a degree of freedom for cell tap management.

BRIEF DESCRIPTION OF THE DRAWINGS

FIG. 1 is a flowchart for explaining a battery module manufacturing method according to an embodiment of the present invention.

FIG. 2A and FIG. 2B are diagrams for explaining a bus bar of a battery module according to embodiments of the present invention.

FIG. 3A and FIG. 3B are diagrams for explaining a bus bar of a battery module according to another embodiment of the present invention.

FIG. 4A and FIG. 4B and FIG. 5A and FIG. 5B are diagrams for explaining bus bars of a battery module according to yet other embodiments of the present invention.

FIG. 6 is a cross-sectional diagram for explaining a shape in which electrode tabs are connected to a bus bar in a battery module according to an embodiment of the present invention.

FIG. 7 is a perspective diagram for explaining a shape in which electrode tabs are connected to a bus bar in a battery module according to an embodiment of the present invention.

FIGS. 8 to 11 are diagrams for explaining a step of bonding electrode tabs to holes in a battery module manufacturing method of according to embodiments of the present invention.

FIG. 12 is a diagram for explaining a welding system used in a step of bonding electrode tabs to holes in a battery module manufacturing method of according to one embodiment of the present invention.

FIG. 13 is a perspective diagram for explaining a shape in which a weld bead is formed in a battery module according to one embodiment of the present invention.

FIG. 14 is a cross-sectional diagram for explaining a shape in which a weld bead is formed in a battery module according to one embodiment of the present invention.

FIGS. 15 to 17 are images showing weld beads formed in a battery module according to embodiments of the present invention.

DETAILED DESCRIPTION

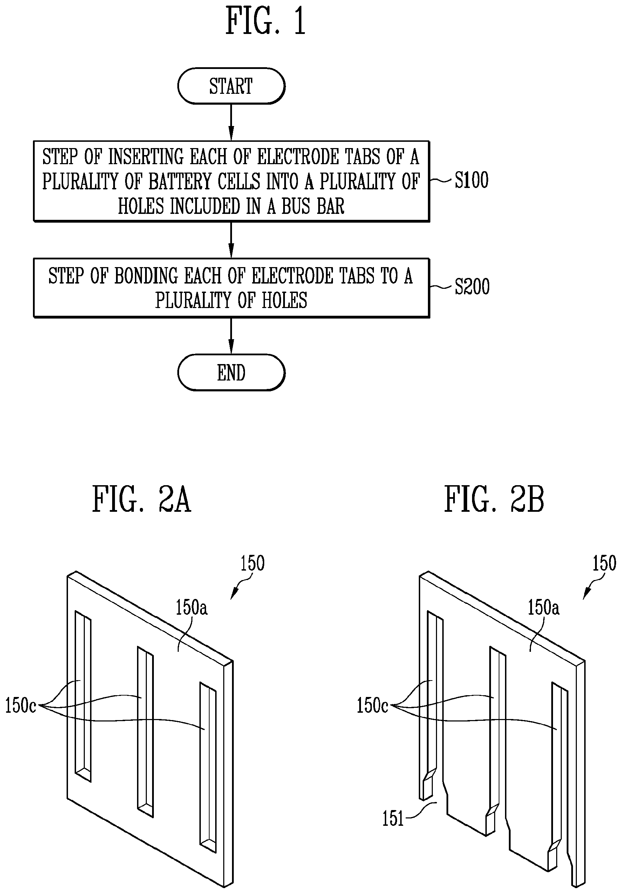

FIG. 1 is a flowchart for explaining a battery module manufacturing method according to an embodiment of the present invention.

Referring to FIG. 1, a battery module manufacturing method according to one embodiment of the present invention may include Step S100 of inserting each of electrode tabs of a plurality of battery cells into a plurality of holes included in a bus bar.

Battery cells may each include one or more electrode tabs.

A bus bar may include a plate, and a plurality of holes may be formed on the plate. The shape of a bus bar will be described in more detail in FIGS. 2 to 4 below.

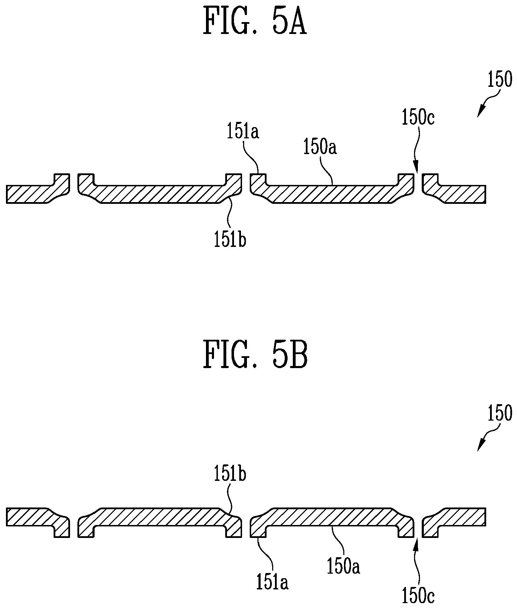

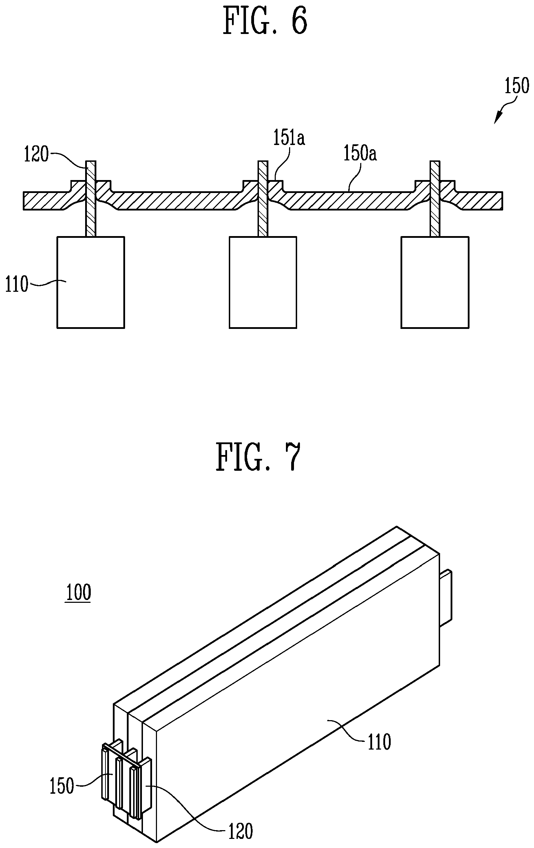

In an embodiment, by inserting electrode tabs into a plurality of holes on one side of a bus bar, more specifically, on one side of a plate, electrode tabs may protrude to the other side of the plate. Step S100 will be described in more detail in FIGS. 5 and 6 below.

In addition, a battery module manufacturing method according to one embodiment of the present invention may include Step S200 of bonding each of electrode tabs to a plurality of holes.

Step S200 may be performed by irradiating laser under feeding of a wire. Step S200 will be described in more detail in FIGS. 7 to 10 below.

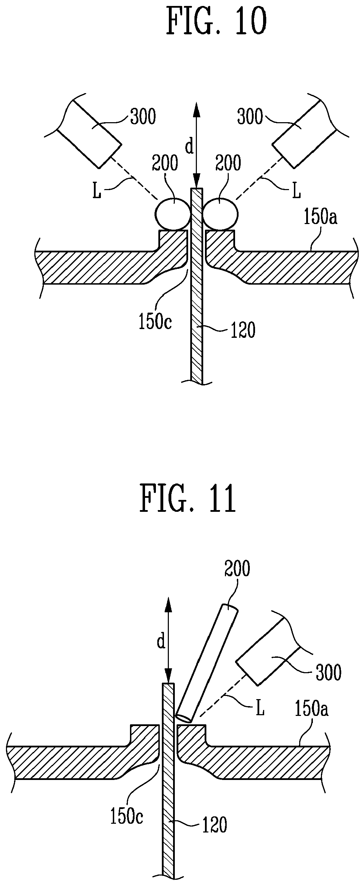

A weld bead joining electrode tabs and a busbar may be formed by irradiating laser under feeding of a wire. A weld bead may be formed using a wire as a base material. A weld bead will be described in more detail in FIGS. 11 to 15 below.

In one embodiment, a battery module on which Step S200 is performed may be a battery module that has previously been welded. That is, Step S200 may be performed again on a battery module having a previously welded area formed in at least a part thereof. For example, when welding was previously performed at electrode tabs of a battery module but defects were generated, re-welding may be performed through Step S200. Previously performed welding may have been performed, for example, by irradiating laser to electrode tabs and busbars, but is not limited to a specific type of welding. Previously performed welding may be performed without feeding a wire or under feeding of a wire.

FIG. 2A and FIG. 2B are diagrams for explaining a bus bar of a battery module according to embodiments of the present invention.

Referring to FIG. 2A, a bus bar 150 may be configured to include a plate 150a and a hole 150c formed on the plate. At this time, a plate may include a plurality of holes 150c capable of accommodating each of a plurality of electrode tabs, and each hole 150c may have a shape and a size corresponding to a cross-section of an electrode tab so that an end of the electrode tab may be inserted into the hole 150c.

Referring to FIG. 2B, each hole 150c may include an insertion portion 151 with one side open so that an electrode tab may be slidably inserted. More specifically, an insertion portion may have a tapered shape that widens toward an open side so that an electrode tab may be easily slidably inserted into a hole 150c, but the shape of an insertion portion 151 is not limited thereto. When both ends of a hole 150c are blocked as shown in FIG. 2A, an electrode tab may be inserted into a hole 150c of a plate 150a in a protruding direction of the electrode tab, and when one end of a hole 150c is open as shown in FIG. 2B, an electrode tab may be inserted into a hole 150c of a plate 150a in an erection direction (width direction) of the electrode tab through an insertion portion 151.

In the present disclosure, one or more holes 150c may be formed one a plate 150a, and electrode tabs inserted into each hole 150c may be welded to electrically connect a plurality of welded battery cells.

In an embodiment, one or more holes 150c may be formed one the plate 150a to correspond to the number of battery cells to be connected. Therefore, to electrically connect battery cells, regardless of the number of battery cells to be connected, battery cells may be electrically connected without changing the shape of the electrode tab. A plate 150a forming a bus bar 150 may include one or more holes 150c having a predetermined spacing, and electrode tabs inserted through the holes 150c may be welded to electrically connect a plurality of battery cells. At this time, since electrode tabs may be inserted and welded in each hole 150c, a plurality of welded battery cells may be electrically connected through a bus bar 150. In an embodiment, the hole 150c may be formed in a slit shape.

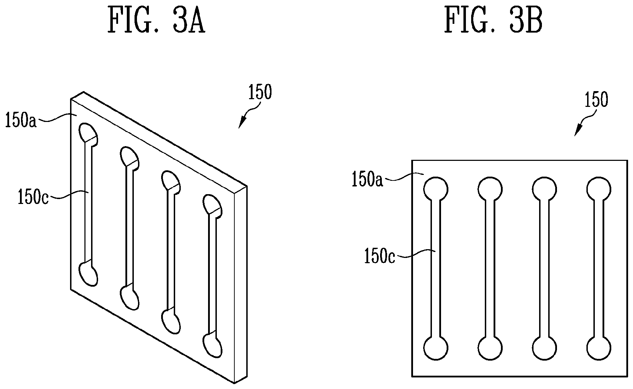

FIG. 3A and FIG. 3B are diagrams for explaining a bus bar of a battery module according to another embodiment of the present invention.

Referring to FIG. 3A and FIG. 3B, a bus bar 150 may include a plate 150a and a hole 150c formed on the plate. FIG. 3A is a perspective diagram of a bus bar 150, and FIG. 3B is a floor diagram of a bus bar 150. A hole 150c may be formed in the shape of a slit, and in one embodiment, an end of a slit may have a wider width than the central portion of the slit.

Accordingly, an electrode tab may be easily inserted into a plate 150a in a diagonal direction.

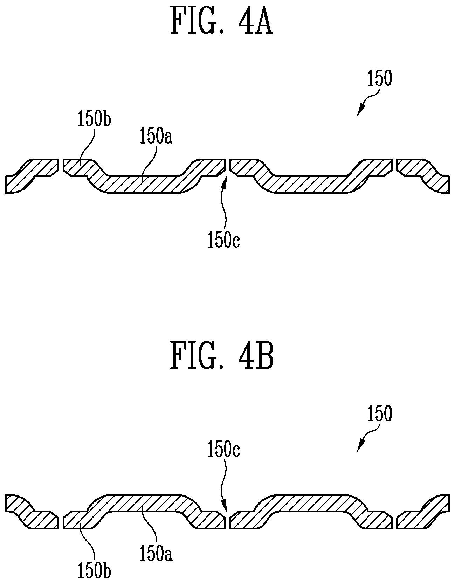

FIG. 4A and FIG. 4B and FIG. 5A and FIG. 5B are diagrams for explaining bus bars of a battery module according to yet other embodiments of the present invention.

Referring to FIG. 4A, a plate 150a may include a protrusion portion 150b formed around a position where a hole 150c is formed. That is, a protrusion portion 150b may be formed at a bus bar 150 according to an embodiment of the present invention. This protrusion portion 150b may be formed at a position where a hole 150c is formed to play a role of guiding an electrode tab to be inserted into a hole 150c. Therefore, a plate 150a may include a plurality of holes 150c formed in predetermined spacings and include a protrusion portion 150b formed around a position where a hole 150c is formed. Electrode tabs inserted into holes 150c may be welded to electrically connect a plurality of battery cells.

In another embodiment, as shown in FIG. 4B, the direction of a protrusion portion may be formed opposite to that shown in FIG. 4A.

However, in the sense that an electrode tab may be more easily inserted, a shape such as shown in FIG. 4A may be more preferable.

Referring to FIG. 5A, a plate 150a may include a tab connection portion 151a. A tab connection portion 151a may be formed by protruding from an outer circumferential surface of each hole 150c in a direction in which an electrode tab 120 protrudes, and later during electrical connection of battery cells by laser welding, may be electrically connected with a bus bar, as an electrode tab comes into contact with a tab connection portion 151a by a wire melted by laser. Here, a concave groove 151b may be formed around a hole 150c on an opposite surface of a tab connection portion 151a to guide an electrode tab 120 to be inserted into the hole 150c.

In another embodiment, as shown in FIG. 5B, the direction of a connection portion may be formed opposite to that shown in FIG. 5A.

However, in the sense that an electrode tab may be more easily inserted, a shape such as shown in FIG. 5A may be more preferable.

FIG. 6 is a cross-sectional diagram for explaining a shape in which electrode tabs are connected to a bus bar in a battery module according to an embodiment of the present invention.

Referring to FIG. 6, an electrode tab 120 of a battery cell 110 may be inserted into a hole 150c formed on a plate 150a of a bus bar 150. An electrode tab 120 may be inserted into a hole 150c on one side of a plate 150a and protrude to the other side of the plate 150a.

In another embodiment, an electrode tab 120 may be inserted into a hole 150c on one side of a plate 150a, but the electrode tab 120 may not protrude to the other side of the plate 150a. That is, one end of an electrode tab 120 in an insertion direction may be positioned within a hole 150c, or may be positioned on a same side as the other side of a plate 150a.

FIG. 7 is a perspective diagram for explaining a shape in which electrode tabs are connected to a bus bar in a battery module according to an embodiment of the present invention.

Referring to FIG. 7, a battery module 100 may include a plurality of battery cells 110 and electrode tabs 120 drawn out from battery cells 110. Electrode tabs 120 of each battery cell 110 may be electrically connected by a bus bar 150.

Electrode tabs 120 of battery cells 110 may penetrate holes of a bus bar 150.

In an embodiment, each battery cell 110 may include a cathode, an anode, and a separator disposed therebetween. In an embodiment, a cathode and an anode may each include a current collector and an active material layer disposed on a current collector. For example, a cathode may include a cathode current collector and a cathode active material layer, and an anode may include an anode current collector and an anode active material layer.

A current collector may include a known conductive material to an extent that it does not cause a chemical reaction within a lithium secondary battery. For example, a current collector may include any one of stainless steel, nickel (Ni), aluminum (Al), titanium (Ti), copper (Cu), and alloys thereof, and may be provided in various forms such as a film, a sheet, a foil or the like.

An active material layer include an active material. For example, a cathode active material layer may include a cathode active material, and an anode active material layer may include an anode active material.

A cathode active material may be a material which lithium (Li) ions may be inserted into and extracted from. A cathode active material may be a lithium metal oxide. For example, a cathode active material may be one of a lithium manganese-based oxide, a lithium nickel-based oxide, a lithium cobalt-based oxide, a lithium nickel manganese-based oxide, a lithium nickel cobalt manganese-based oxide, a lithium nickel cobalt aluminum-based oxide, a lithium iron phosphate-based compound, a lithium manganese phosphate-based compound, a lithium cobalt phosphate-based compound, and a lithium vanadium phosphate-based compound, but is not necessarily limited to a specific example.

An anode active material may be a material which lithium ions may be absorbed into and extracted from. For example, an anode active material may be any one of carbon-based materials, such as crystalline carbon, amorphous carbon, carbon composite, and carbon fiber, a lithium alloy, silicon (Si), and tin (Sn). Depending on an embodiment, an anode active material may be natural graphite or artificial graphite, but is not limited to a specific example.

A cathode and an anode may each further include a binder and a conductive material.

A binder may mediate joining between a current collector and an active material layer to improve mechanical stability. According to an embodiment, a binder may be an organic binder or an aqueous binder, and may be used with a thickener such as carboxymethyl cellulose (CMC). According to an embodiment, an organic binder may be any one of vinylidene fluoride-hexafluoropropylene copolymer (PVDF-co-HFP), polyvinylidene fluoride (PVDF), polyacrylonitrile, and polymethyl methacrylate, and an aqueous binder may be styrene-butadiene rubber (SBR), but is not necessarily limited thereto.

A conductive material may improve electrical conductivity of lithium secondary batteries. A conductive material may include a metal-based material. According to an embodiment, a conductive material may include a typical carbon-based conductive material. For example, a conductive material may include any one of graphite, carbon black, graphene, and carbon nanotubes. Preferably, a conductive material may include carbon nanotubes.

A separator may be disposed between a cathode and an anode. A separator may be configured to prevent electrical short-circuiting between a cathode and an anode and to generate a flow of ions.

According to an embodiment, a separator may include a porous polymer film or a porous non-woven fabric. Here, a porous polymer film may be configured to be a single layer or multiple layers including a polyolefin-based polymer such as an ethylene polymer, a propylene polymer, an ethylene/butene copolymer, an ethylene/hexene copolymer, and an ethylene/methacrylate copolymer. A porous nonwoven fabric may include high-melting point glass fibers and polyethylene terephthalate fibers. However, it is not limited thereto, and depending on an embodiment, a separator may be a highly heat-resistant separator (CCS; Ceramic Coated Separator) including ceramic.

Each battery cell 110 may include one or more electrode tabs 120 protruding in one direction.

In one specific example, a battery cell 110 may be a pouch-type battery cell. A pouch-type battery cell may be a battery cell in which an electrode assembly including a cathode, an anode, and a separator disposed therebetween is impregnated with an electrolyte (electrolyte solution) and sealed in a pouch. A pouch may have a multilayer film structure in which a metal film, such as an aluminum film, is interposed between an outer layer film and an inner layer film, but is not limited thereto. In a battery module 100 according to one specific example, electrode tabs of each of a plurality of pouch-type battery cells 110 stacked in one direction are inserted and welded into each hole of a bus bar so that a plurality of pouch-type battery cells 110 may be electrically connected to each other.

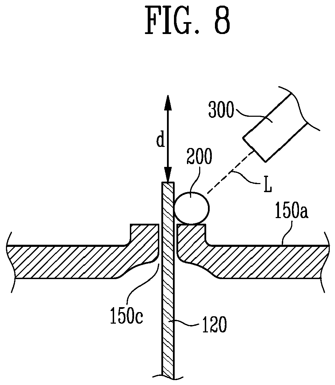

FIGS. 8 to 11 are diagrams for explaining a step of bonding electrode tabs to holes in a battery module manufacturing method of according to embodiments of the present invention.

Referring to FIGS. 8 to 11, laser L may be irradiated by a welding system 300.

In addition, a wire 200 may be provided around a protruding electrode tab 120. A wire may be disposed on a plate 150a as shown in FIGS. 8 to 10, and a wire 200 may be fed through a separate device as shown in FIG. 11. In one embodiment, a wire 200 may be fed through a feeding portion included in a welding system 300.

Referring to FIG. 8, a wire 200 may be positioned on one side of an electrode tab 120, and at this time, laser L irradiated by a welding system 300 may be obliquely irradiated with respect to a central axis in a longitudinal direction d of an electrode tab 120 that is inserted to a hole 150c and protruding. Accordingly, when laser L is irradiated perpendicularly to an end surface of an electrode tab 120, the possibility that laser L may be irradiated directly to a battery cell due to an error during welding and lead to an accident may be minimized. In addition, as laser L is obliquely irradiated, a welding process of an end surface of an electrode tab 120 may be visually confirmed, making possible improvement of quality and production speed of battery modules.

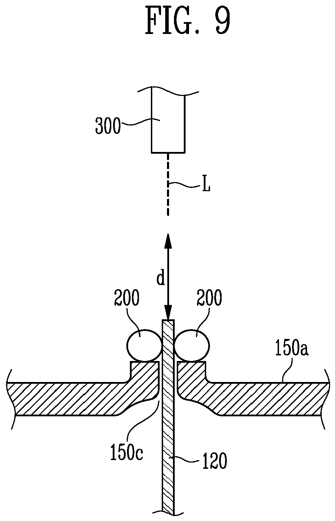

Referring to FIGS. 9 and 10, wires 200 may be positioned on a plurality of sides of an electrode tab 120. In this case, laser L irradiated by a welding system 300 may be irradiated in parallel with a longitudinal direction d central axis of an electrode tab that is inserted into a hole 150c and protruding, as shown in FIG. 9, or it may be obliquely irradiated, as shown in FIG. 10. When laser L is irradiated in parallel with a longitudinal direction d central axis of an electrode tab 120, as shown in FIG. 9, a hole 150c of a bus bar may be blocked by tightly contacting a wire to an electrode tab 120 in order to prevent laser L from being directly irradiated to a battery cell.

Referring to FIG. 11, a wire 200 may be fed through a separate device. In this case as well, laser L irradiated by a welding system 300 may be irradiated in parallel with a longitudinal direction d central axis of an electrode tab 120 that is inserted into a hole 150c and protruding, or it may be obliquely irradiated.

A wire 200 is a type of filler material, and a wire 200 may be melted by irradiating laser onto a wire 200. A molten wire may be cooled again to join an electrode tab 120 with a plate 150a.

In an embodiment, a wire 200 may include a same material as an electrode tab 120. When a wire 200 and an electrode tab 120 are made of a same material, it may be easy to bond a weld bead formed from a wire 200 to an electrode tab 120. When a wire 200 and an electrode tab 120 are made of a same material, this may be desirable in the sense that generation of intermetallic compounds that cause cracks may be prevented, and thus weldability may be improved. In addition, additives that may improve weldability may be added during welding. Additives may be included in a wire or separately fed from a wire.

In addition, in one embodiment, an electrode tab 120 and a wire 200 may include a material different from a bus bar, and more specifically, a plate 150a. For example, an electrode tab 120 may include aluminum (Al), and a plate 150a may include copper (Cu). Alternatively, an electrode tab 120 may include copper (Cu), and a plate 150a may include aluminum (Al). For example, when an electrode tab 120 or a plate 150a includes aluminum (Al), an electrode tab 120 or a plate 150a may be made of aluminum with a purity of 90% or more, and specifically, made of aluminum with a purity of 95% or more, 99% or more or 99.5% or more. For example, an electrode tab 120 or a plate 150a may be made of industrial pure aluminum, and commercial products such as Al1000 series (UNS #) such as Al1050, Al1100, or Al1200 may be used. In addition, for example, when an electrode tab 120 or a plate 150a includes copper (Cu), an electrode tab 120 or a plate 150a may be made of copper with a purity of 98% or more, 99% or more, or 99.3% or more. For example, an electrode tab 120 or a plate 150a may be made of industrial pure copper, and commercial products such as C10100 to C13000 series (UNS #) such as C11000, C10100, C10200, C12500, or the like may be used.

In another embodiment, an electrode tab 120 and a wire 200 may include a same material as a bus bar, and more specifically, a plate 150a.

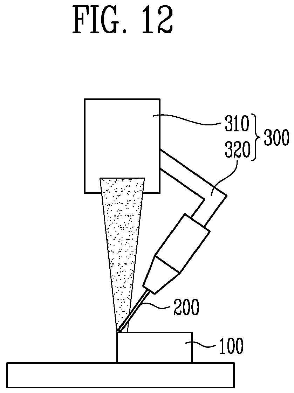

FIG. 12 is a diagram for explaining a welding system used in a step of bonding electrode tabs to holes in the battery module manufacturing method of according to one embodiment of the present invention.

Referring to FIG. 12, a welding system 300 may include a light irradiation portion 310 irradiating laser to a battery module 100 and a feeding portion 320 feeding a wire 200, which is a filler material. A wire feeding rate, laser power, laser irradiation pattern, and the like may be appropriately selected according to the shape and quality of a weld bead to be formed through a wire.

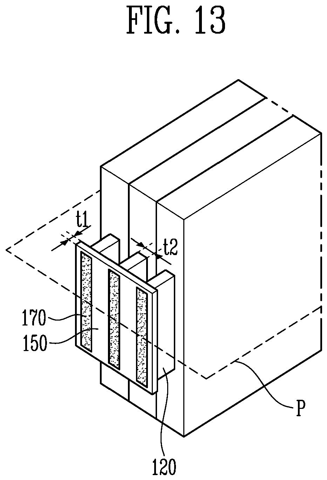

FIG. 13 is a perspective diagram for explaining a shape in which a weld bead is formed in a battery module according to one embodiment of the present invention.

Referring to FIG. 13, by laser welding an electrode tab penetrating a hole formed on a plate of a bus bar 150 and a plate, a weld bead 170 may be formed on a plate of a bus bar 150.

In an embodiment, a weld bead 170 may be formed using a wire fed during laser welding as a base material. As described above, a wire may be fed separately from an electrode tab 120. In one embodiment, a part of a weld bead 170 may be derived from an electrode tab 120. In addition, in one embodiment, a portion of the weld bead 170 may be derived from a plate of a bus bar 150.

For example, a weld bead 170 may be formed using a wire as a first base material for welding and a plate as a second base material for welding. At this time, a surface plating layer may be formed on a wire, which is a first base material (welding base material), and/or a plate, which is a second base material. That is, a wire and/or a plate may include a surface plating layer, and in particular, an electrode tab, of which electro/chemical stability to an electrolyte solution must be ensured, may include a surface plating layer. As is known, a surface plating layer to ensure electrical/chemical stability to an electrolyte solution may include Ni, Sn, Si, Mg, Fe, Mn, Zn, Cr, Li, Ca, or alloys thereof. Of course, when a surface plating layer is present on an electrode tab and/or a plate, a dilution rate of a surface plating layer itself may also be calculated through an analysis of a weight percent (wt%) of a weld bead including a first base material, a second base material, and a plating component. Composition components of a welding metal (weld bead) throughout welding may be quantified by EDS (Energy Dispersive Spectroscopy) with respect to various process factors.

In FIG. 13, t1 may refer to a thickness direction of a bus bar 150, and more specifically, a thickness direction of a plate included in a bus bar 150. In one embodiment, a plate 150a may preferably have a thickness of 0.5 mm or more, and for example, a plate 150a may have a thickness of 0.5 mm to 10 mm, 1 mm to 8 mm, or 1 mm to 6 mm, but it is not necessarily limited thereto.

In FIG. 13, t2 may refer to a thickness direction of an electrode tab 120. An electrode tab 120 may be configured to penetrate a hole in a direction perpendicular to a surface of a plate 150a. The thickness of an electrode tab 120 may preferably be 0.2 mm or more, and more preferably 0.2 to 1.0 mm. When an electrode tab 120 has a thickness of 0.2 mm or more, a weld bead 170 with more desirable physical properties may be formed.

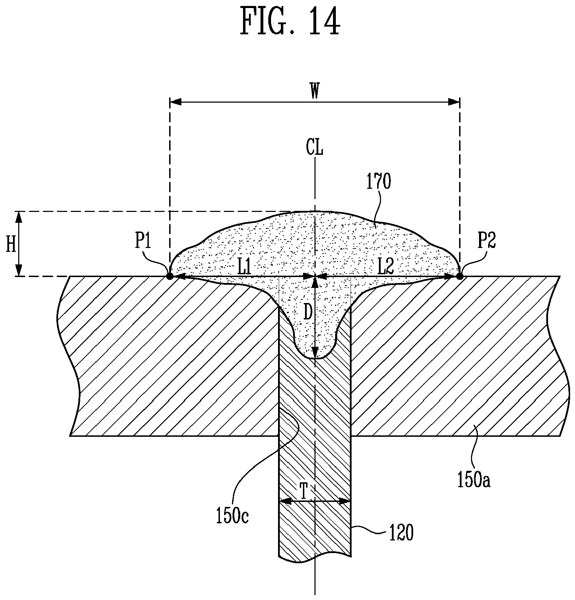

FIG. 14 is a cross-sectional diagram for explaining a shape in which a weld bead is formed in a battery module according to one embodiment of the present invention.

Referring to FIGS. 13 and 14, a weld bead 170 formed by heating and melting a wire with laser may join an electrode tab 120 that penetrates a hole 150c of a plate 150a with a plate 150a.

Here, FIG. 14 may show a cross-section of a weld bead 170 in a thickness direction of a plate 150a. Specifically, a cross-section of a weld bead 170 in a thickness direction of a plate 150a may refer to a cross-section cut by an imaginary plane parallel to a thickness direction of a plate 150a (an imaginary plane with an in-plane thickness direction) and a cross-section that is cut to minimize the area of a weld bead 170. As a practical example, as shown in FIG. 13, a imaginary plane P forming a cut cross-section of a weld bead 170 may refer to an imaginary plane that is parallel to a thickness direction t1 of a plate 150a and at the same time, parallel to a thickness direction t2 of an electrode tab, and a cross-section of a weld bead 170 may refer to a cross-section cut by the imaginary plane P described above.

In an embodiment, a weld bead may have a width (W) and a height (H) that satisfy Equations 1 and 2 below.

<Equation 1>

$$0 < W \leq 9T$$

In Equation 1, W is a width of a weld bead 170 based on a cross-section of a weld bead in a thickness direction of the plate, and T is a thickness of the electrode tab.

<Equation 2>

$$0 < H \leq 4.5T$$

In Equation 2, H is a height of a weld bead 170 based on a cross-section of a weld bead in a thickness direction of the plate, and T is the thickness of the electrode tab.

Here, the unit of T may be mm.

Equations 1 and 2 described above may be of particular importance when a wire and a plate 150a are made of different materials (metal materials). That is, in welding of dissimilar materials, when a width W of a weld bead 170 is more than 9T, formation of an intermetallic compound between dissimilar materials may be induced. As a more practical example, when an electrode tab is made of aluminum and a plate (bus bar) is made of copper, if a width of a weld bead 170 is more than 9T, the amount of melting of a Cu plate (bus bar) may increase, thereby causing formation of an intermetallic compound at an interface and thus causing deterioration in the quality of a welded area, such as microcracks within the welded area and an increase of resistance. In one embodiment, a width W may be 7T or more, 7.2T or more, or 7.5T or more. That is, by using a wire, which is a separate filler metal, an upper limit of a width W may be increased compared to a case where a wire is not used.

In addition, when a height (H) of a weld bead 170 is more than 4.5T, a penetration depth may be lowered, thereby causing a problem in which interfacial bond strength between different materials is weakened. In one embodiment, a height (H) may be 3T or more, 3.2T or more, or 3.5T or more. That is, by using a wire, which is a separate filler material, an upper limit of a height H may be increased compared to a case where a wire is not used. Equation 1 shows a morphological parameter that significantly affects a dilution rate between welding base materials in a weld beading, and Equation 2 shows a morphological parameter that significantly affects a shape of a weld bead itself.

In detail, a weld bead may include: a cover portion having a convex shape covering a hole on one of two opposing surfaces in a thickness direction of a plate 150a, based on a cross-section of a weld bead 170 in a thickness direction of a plate 150a; and a pillar portion charged into a hole. When a molten metal derived from welding base materials is cooled during welding to form a weld bead 170, not only composition of a weld bead 170 but also a shape of a weld bead itself, including a cover portion and a pillar portion, affects mechanical properties of a welded area. Equation 2 shows a morphological parameter that affects a shape of a weld beading itself. When a height H of a weld bead is more than 4.5T, a length of a pillar portion of a weld bead 170 may be shorter, thereby causing a problem of lowering interfacial bond strength.

Advantageously, to ensure stable welding quality, a weld bead width W may be 2T to 8T, more advantageously 3T to 7T, and a height H may be 0.5T to 3T, more advantageously 0.5T to 2T. When such width and height of a weld bead 170 are satisfied, it may have improved tensile strength and low contact resistance, thereby exhibiting excellent welding characteristics. Furthermore, when a weld bead 170 satisfies such width and height, even when specific welding conditions, for example, specific welding conditions such as a heat gradient state caused during welding or a laser irradiation method during welding, are changed, constant welding quality (improved welding strength, excellent electrical characteristics of a welded area, etc.) may be stably and reproducibly secured.

The width and height of a weld bead 170 described above may directly affect a cross-sectional area of a weld bead 170. Accordingly, in another embodiment, while an electrode tab 120 and a plate 150a inserted into a hole 150c are joined to each other by a weld bead 170, a weld bead 170 may satisfy Equation 3 below.

<Equation 3>

$$0 < A \leq 40.5T^2$$

In Equation 3, A is a cross-sectional area of a weld bead 170 based on a cross-section of a weld bead in a thickness direction of the plate, and T is a thickness of the electrode tab.

A weld bead 170 may have a cross-sectional area A of $40.5T^2$ (mm$^2$) or less. When a cross-sectional area exceeds $40.5T^2$, various types of problems may occur, such as increased generation of intermetallic compounds (IMC), decreased weld strength, and crack generation in a welded area. More preferably, based on a cross-section of a weld bead, a cross-sectional area of a weld bead 170 may satisfy $1T^2$ to $24T^2$, more advantageously $1T^2$ to $21T^2$. When such a weld bead cross-sectional area is satisfied, it may have improved tensile strength and low contact resistance, thereby exhibiting excellent welding characteristics, and it may exhibit constant welding characteristics without being substantially affected by specific welding conditions. In one embodiment, a cross-sectional area (A) may be $21T^2$ or more, $25T^2$ or more, or $30T^2$ or more. That is, by using a wire, which is a separate filler material, an upper limit of a cross-sectional area A may be increased compared to a case where a wire is not used.

A weld bead 170 may satisfy Equations 1 and 2 described above, and it may further satisfy Equation 3, and independently, it may satisfy Equation 3 and at the same time, it may further satisfy Equation 1, Equation 2, or Equations 1 and 2.

The width W of a weld bead 170 described above may be a width of a cover portion based on a cross section of a weld bead 170. Specifically, a width W of a weld bead 170 may mean, on a weld bead cross-section in a thickness direction of a plate, with both ends in a thickness direction of an electrode tab of a weld bead 170 in contact with a plate 150a as boundary points P1, P2, a distance between two boundary points P1, P2 on the left and right. At this time, an example illustrated in FIG. 14 is a case where two boundary points P1, P2 on the left and right are positioned at a same height, and thus a width of a bead is illustrated as shown in FIG. 14. When two boundary points P1, P2 on the left and right are not positioned at a same height, a width of a bead may be defined as a shortest distance between two boundary points. Accordingly, a thickness direction t2 of an electrode tab may be defined as a width direction of a cross-section of a weld bead 170.

A height H of a weld bead 170 may be a maximum height of a cover portion based on a cross-section of a weld bead 170. Specifically, a height H of a bead may be, on a cross-section of a weld bead in a thickness direction of a plate, a distance (shortest distance) between an imaginary line connecting two boundary points P1, P2 on the left and right and a highest point of a cover portion. At this time, an example shown in FIG. 14 is a case where boundary points P1, P2 on the left and right are positioned at a same height, and thus a width of a bead is simply illustrated as shown in FIG. 14, and a height of a weld bead 170 may be defined as a shortest distance between an imaginary line connecting two boundary points and a highest point of a cover portion.

In one embodiment, a weld bead 170 may further satisfy Equation 4.

<Equation 4>

$$0.4T \leq D \leq 4T$$

In Equation 4, D is a penetration depth of the weld bead into a hole based on a cross-section of a weld bead in a thickness direction of a plate, and T is a thickness of the electrode tab.

In detail, a penetration depth D may be a distance (shortest distance) between an imaginary line connecting two boundary points P1, P2 on the left and right and a lowest point of a weld bead 170 positioned inside a hole. A penetration depth may correspond to a length of a pillar portion. A penetration depth may be a factor related to mechanical properties due to a shape of a weld bead 170 itself and to a dilution rate of a plate 150a. When a penetration depth satisfies a penetration depth of 0.4T to 4T, preferably 0.4T to 3.0T, and more preferably 0.5T to 2.0T, a dilution rate of a plate 150a may controlled to 5% or less, and thus mechanical properties may be improved by a shape of a weld bead 170. In one embodiment, a penetration depth D may be 2T or more, 2.3T or more, or 3T or more. That is, by using a wire, which is a separate filler material, an upper limit of a penetration depth D may be increased compared to a case where a wire is not used.

In one specific example, on a cross-section of a weld bead 170 in a thickness direction of a plate 150a, a weld bead 170 may be left-right symmetrical or left-right asymmetrical with respect to a center line CL of a hole 150c. At this time, as an electrode tab 120 is inserted into a hole 150c, a center line of the hole 150c may be the same as a center line of the electrode tab 120 inserted into the hole 150c. Referring to FIG. 14, when shortest distances between two boundary points P1, P2 on the left and right and a center line of a hole are set to be L1 and L2, and if L1 and L2 are different, a longer length is set to be L2, left-right asymmetry may mean that a ratio of L1 and L2 is 1:1 to 1:3. A left-right asymmetric structure may be mainly affected by laser irradiation direction, and this asymmetric structure may be exhibited when laser is obliquely irradiated. It is known that a left-right asymmetric structure of a weld bead 170 is not advantageous to mechanical properties of a welded area. However, according to one embodiment of the present invention, when parameters of a bead width, bead height, or cross-sectional area of a bead are satisfied, mechanical properties (weld strength) of a welded area are significantly affected by a asymmetric structure of a weld bead 170. That is, even when it has a left-right or left-right symmetrical structure, it may exhibit welding properties with substantially constant, uniform, and improved mechanical properties. In one embodiment, a ratio of L1 and L2 may be 1:1 to 1:1.2. That is, by using a wire, which is a separate filler material, left-right symmetry of a weld bead 170 may be improved compared to a case where a wire is not used.

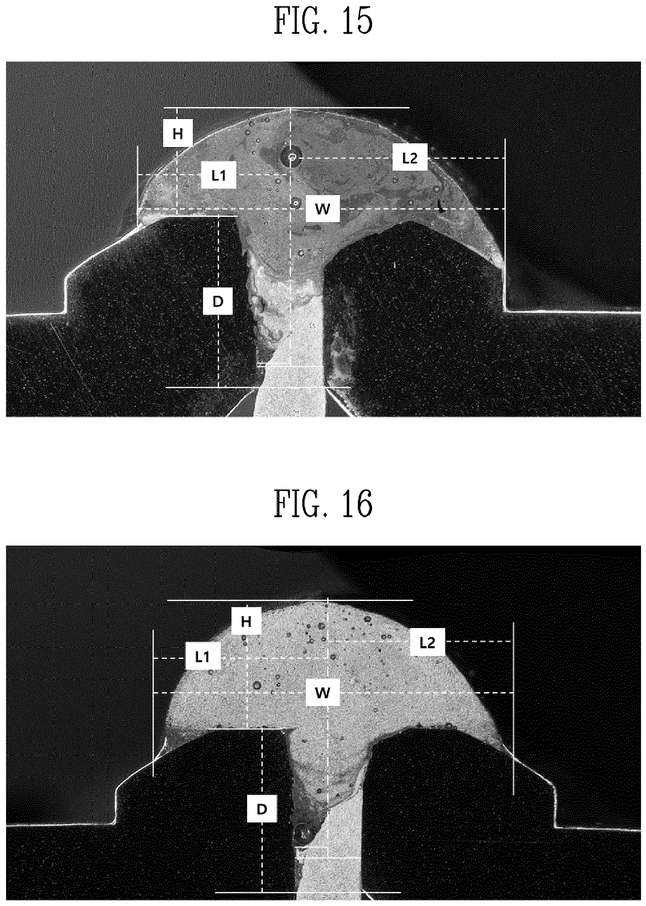

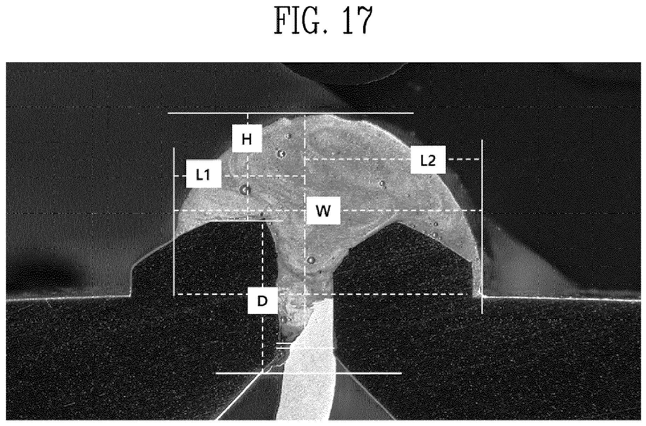

FIGS. 15 to 17 are images showing weld beads formed in a battery module according to embodiments of the present invention.

Referring to FIGS. 15 to 17, welding beads of different shapes were formed by welding plates into which each electrode tab was inserted. At this time, it can be seen that a plate surface in contact with a weld bead is formed to be inclined downward in a longitudinal direction toward an outer circumference of a weld bead. In this way, a plate surface bonded to a formed weld bead may be configured to be inclined downward from a center of a hole toward an outer circumference of a weld bead so that a shape of a weld bead may be formed to be smooth, thereby preventing deterioration of welding strength due to rough shapes such as notches.

The width W, height H, penetration depth D, shortest distances between boundary points and a center line of a hole L1, L2, and L1:L2 values shown in FIGS. 15 to 17 were measured and are shown in Table 1 below.

[Table 1]

|  | W | H | D | L1 | L2 | L1:L2 |
|---|---|---|---|---|---|---|
| FIG. 15 | 3.12 mm | 0.91 mm | 1.47 mm | 1.29 mm | 1.82 mm | 1:1.41 |
|  | 7.80T | 2.27T | 3.67T | 3.23T | 4.56T |  |
| FIG.16 | 2.31 mm | 0.87 mm | 1.13 mm | 1.11 mm | 1.20 mm | 1:1.08 |
|  | 5.77T | 2.17T | 2.82T | 2.78T | 2.99T |  |
| FIG.17 | 2.68 mm | 0.93 mm | 1.32 mm | 1.14 mm | 1.54 mm | 1:1.36 |
|  | 6.69T | 2.33T | 3.31T | 2.84T | 3.85T |  |

**Claims**

1. A battery module manufacturing method comprising:

   a step of inserting each of electrode tabs of a plurality of battery cells into a plurality of holes included in a bus bar; and
   a step of bonding the electrode tabs to the bus bar by irradiating laser under feeding of a wire,
   wherein the bus bar electrically connects the electrode tabs of the plurality of battery cells to each other.

2. The battery module manufacturing method according to claim 1, wherein in the step of bonding the electrode tabs to the bus bar, a weld bead joining the electrode tabs and the bus bar is formed.

3. The battery module manufacturing method according to claim 2, wherein the weld bead is formed using a wire as a base material.

4. The battery module manufacturing method according to any one of claims 2 or 3, wherein the weld bead satisfies Equations 1 and 2 below:

<Equation 1>

$$0 < W \leq 9T$$

(In Equation 1, W is a width of a weld bead based on a cross-section of a weld bead in a thickness direction of the bus bar, and T is a thickness of the electrode tab.)

<Equation 2>

$$0 < H \leq 4.5T$$

(In Equation 2, H is a height of a weld bead based on a cross-section of a weld bead in a thickness direction of the bus bar, and T is the thickness of the electrode tab.)

5. The battery module manufacturing method according to claim 4, wherein the W is 2T to 8T, and the H is 0.5T to 3T.

6. The battery module manufacturing method according to any one of claims 2 to 5, wherein the weld bead satisfies Equation 3 below:

<Equation 3>

$$0 < A \leq 40.5T^2$$

(In Equation 3, A is a cross-sectional area of a weld bead based on a cross-section of a weld bead in a thickness direction of the bus bar, and T is a thickness of the electrode tab.)

7. The battery module manufacturing method according to claim 6, wherein the A is $1T^2$ to $24T^2$.

8. The battery module manufacturing method according to any one of claims 2 to 7, wherein the weld bead satisfies Equation 4 below:

<Equation 4>

$$0.4T \leq D \leq 4T$$

(In Equation 4, D is a penetration depth of the weld bead into a hole based on a cross-section of a weld bead in a thickness direction of the bus bar, and T is a thickness of the electrode tab.)

9. The battery module manufacturing method according to any one of claims 1 to 8, wherein the wire includes a same material as the electrode tab and/or wherein the bus bar includes a different material from the electrode tab.

10. The battery module manufacturing method according to any of one of claims 1s to 9, wherein the wire and the electrode tab include aluminum, and the bus bar includes copper.

11. The battery module manufacturing method according to any one of claim 1 to 10, wherein a thickness of the electrode tab is 0.2 mm or more, and/or wherein a thickness of the bus bar is 0.5 mm or more.

12. The battery module manufacturing method according to claim 2, wherein, on a cross-section of a weld bead in a thickness direction of the bus bar, the weld bead is left-right asymmetrical based on a center line of a hole.

**13.** The battery module manufacturing method according to claim 12, on a cross-section of a weld bead in a thickness direction of the bus bar, the ratio of L1 and L2, which are shortest distances from a center line of a hole to both ends of the weld bead in contact with the bus bar in a width direction, is 1:1 to 1:3.

**14.** A battery module comprising:

a plurality of battery cells, each including an electrode tab; and
a bus bar including a plurality of holes into which the electrode tabs are each inserted, and connected to the electrode tabs to electrically connect the plurality of battery cells to each other,
wherein the electrode tabs inserted into the holes and the bus bars are joined with each other by a weld bead,
wherein the weld bead is formed using a separate wire that is distinguished from the electrode tab as a base material, and
wherein the width of the weld bead based on a weld bead cross-section in the thickness direction of the bus bar may be 7 times or more than a thickness of the electrode tab.

**15.** The battery module according to claim 14, wherein a height of a weld bead, based on a cross-section of a weld bead in a thickness direction of the bus bar, is triple or more than the thickness of the electrode tab, and/or wherein a cross-sectional area of a weld bead, based on a cross-section of a weld bead in a thickness direction of the bus bar, is 21 times or more than a square of the thickness of the electrode tab.

# FIG. 1

```
        ┌─────────┐
        │  START  │
        └─────────┘
             │
             ▼
┌─────────────────────────────────────────┐
│ STEP OF INSERTING EACH OF ELECTRODE      │
│ TABS OF A PLURALITY OF BATTERY CELLS     │─ S100
│ INTO A PLURALITY OF HOLES INCLUDED IN    │
│ A BUS BAR                                │
└─────────────────────────────────────────┘
             │
             ▼
┌─────────────────────────────────────────┐
│ STEP OF BONDING EACH OF ELECTRODE        │
│ TABS TO A PLURALITY OF HOLES             │─ S200
└─────────────────────────────────────────┘
             │
             ▼
        ┌─────────┐
        │   END   │
        └─────────┘
```

# FIG. 2A    FIG. 2B

FIG. 3A

FIG. 3B

# FIG. 4A

150

150b

150a

150c

# FIG. 4B

150

150c

150a

150b

FIG. 5A

FIG. 5B

# FIG. 6

# FIG. 7

# FIG. 8

# FIG. 9

# FIG. 10

# FIG. 11

# FIG. 12

# FIG. 13

# FIG. 14

FIG. 15

FIG. 16

FIG. 17